# EUROPÄISCHE PATENTSCHRIFT

(11) **EP 0 773 373 B1**
(45) Veröffentlichungstag und Bekanntmachung des Hinweises auf die Patenterteilung: **28.03.2001**
(21) Anmeldenummer: 96114700.6
(22) Anmeldetag: 13.09.1996
(51) Int. Cl.: F16B 13/06

(54) **Metallspreizanker**
Metal expansion anchor
Cheville à douille métallique expansible

(30) Priorität: 08.11.1995 DE 19541564
(43) Veröffentlichungstag der Anmeldung: 14.05.1997
(73) Patentinhaber: fischerwerke Artur Fischer GmbH & Co. KG, D-72178 Waldachtal (DE)
(72) Erfinder: Fischer, Artur, Prof. Dr. h.c. Dr.-Ing. E.h., 72178 Waldachtal (DE); Elger, Dirk, Dipl.-Ing. (BA), 72275 Alpirsbach (DE)

(56) Entgegenhaltungen:
- EP-A- 0 308 594
- EP-A- 0 561 112
- DE-A- 2 261 441
- FR-A- 1 567 111
- GB-A- 1 418 881
- US-A- 5 344 268

## Beschreibung

Die Erfindung betrifft einen Metallspreizanker zur Verankerung in einem Bohrloch eines Bauteiles gemäß der Gattung des Anspruches 1.

Aus der DE-OS 34 20 375 ist ein Spreizanker bekannt, der an seinem Schaftende einen in eine Spreizhülse einziehbaren Spreizkonus besitzt. Das Einziehen des Spreizkonus erfolgt dabei derart, daß eine am anderen Ende des Schaftes angeordnete Schraube sich an einem zu befestigenden Gegenstand abstützt, sodaß durch Drehung der Schaft und damit der Spreizkonus axial verschoben wird. Die Spreizhülse bleibt dabei ortsfest im Bohrloch fixiert und wird durch den Spreizkonus aufgespreizt, wobei die durch die Längsschlitze der Spreizhülse gebildeten Spreizsegmente gegen die Bohrlochwandung gepreßt werden.

Derartige Spreizanker werden vorzugsweise in Betonmauerwerk eingesetzt. Treten nun nachträglich Bohrlocherweiterungen auf, beispielsweise aufgrund von Rißbildungen, so besteht die Forderung, daß die Spreizanker nachspreizen, um weiterhin ihre Haltefunktion sicher zu erfüllen. Das Nachspreizverhalten wird jedoch bei einem in einem Bohrloch verankerten Spreizanker durch Verpressungen zwischen Spreizkonus und Spreizhülse ungünstig beeinflußt. Bei entsprechend hohen Spreizkräften kann die Spreizhülse am Spreizkonus festfressen.

Ein gattungsgemäßer Metallspreizanker mit einem in eine Spreizhülse einziehbaren Spreizkonus ist auch aus der DE-PS 37 30 211 bekannt. Um die Gleitfähigkeit der Spreizhülse im Bereich des Spreizkonus zu erhöhen, ist ein geschlossener Gleitring in einer umlaufenden Nut des Spreizkonus angeordnet. Beim Eindringen des Spreizkonus in die Spreizhülse wird vom Gleitring Material abgeschabt und von der Stirnkante der Spreizhülse in der Weise vor sich hergeschoben, daß ein Gleitfilm auf der Außenfläche des Spreizkonus entsteht. Die plastische Verformung des Gleitringes beim Abschaben erfordert jedoch eine erhöhte Einzugskraft, die durch entsprechend höheres Drehmoment aufgebracht werden muß. Desweiteren ergibt sich durch inhomogene Stellen im Bereich der Bohrlochwandung sehr häufig eine ungleichmäßige Aufspreizung der Spreizsegmente, die dazu führt, daß der Spreizkonus nicht gleichmäßig mit einem Gleitfilm überzogen wird. Stellenweise kann der Gleitfilm vollständig fehlen, sodaß an diesen Stellen ein Nachspreizen nur beschränkt stattfindet oder gänzlich entfällt. Ferner erfordert das Anbringen des Gleitringes bei dem bekannten Spreizanker einen höheren Fertigungsaufwand.

Der Erfindung liegt die Aufgabe zugrunde, einen Metallspreizanker zu schaffen, der kostengünstig herstellbar ist und ein Nachspeizverhalten aufweist, das auch bei ungünstigen Montagebedingungen wirksam ist.

Die Lösung dieser Aufgabe wird durch die im Anspruch 1 angegebenen Merkmale erreicht.

Die Gleithülse ist eine dünnwandige, einen durchgehenden Längsschlitz aufweisende Kunststoffhülse, die auf dem reduzierten Abschnitt des Schaftes des Spreizankers angeordnet ist. Damit liegt die Spreizhülse auf ihrer gesamten Länge auf der Kunststoffhülse auf, sodaß an keiner Stelle ein Metallkontakt besteht. Mit der an der Gleithülse angeordneten und an der Spreizhülse anstoßenden Anschlagkante wird die Gleithülse an der Spreizhülse beim Einziehen des Spreizkonus in die Spreizhülse in der Weise abgestützt, daß die Gleithülse zusammen mit der Spreizhülse auf den Spreizkonus aufgleitet. Damit ist sichergestellt, daß während des gesamten Verankerungsvorganges sich eine Kunststoffschicht zwischen dem Spreizkonus und der Spreizhülse befindet. Da somit auch beim Aufspreizvorgang an keiner Stelle ein Metallkontakt stattfinden kann, ist eine Kaltverschweißung und Fressen zwischen Spreizhülse und Spreizkonus verhindert. Dies hat zur Folge, daß die Gleitfähigkeit zwischen Spreizkonus und Spreizhülse und damit auch das Nachspreizverhalten bei einer Bohrlocherweiterung durch Rißbildung verbessert wird.

Die Anschlagkante kann entweder durch einen am vorderen Ende der Gleithülse angeordneten Bund gebildet sein, an den die Stirnkanten der Spreizsegmente der Spreizhülse anstoßen oder durch die zum hinteren Ende weisenden Stirnflächen von an der Gleithülse angeordneten Längsrippen, die in die Längsschlitze der Spreizhülse eingreifen. Durch die Längsrippen und der sich dadurch ergebenden Profilierung wird außerdem eine höhere Steifigkeit erreicht, durch die unter Umständen beim Einziehen des Spreizkonus auftretende Materialaufwerfungen vermieden werden.

Um eine einfache Montage der Gleithülse zusammen mit der Spreizhülse auf den reduzierten Abschnitt zu ermöglichen, sind an der Gleithülse zwei Längsrippen symetrisch dem durchgehenden Längsschlitz gegenüberliegend angeordnet, wobei der durchgehende Längsschlitz im unmontierten Zustand eine lichte Weite aufweist, die etwa dem Durchmesser des reduzierten Abschnittes des Schaftes entspricht. Damit ist es möglich, die Gleithülse zur Montage in die ebenfalls U-förmig aufgebogene Spreizhülse einzulegen und zusammen mit dieser seitlich auf den reduzierten Abschnitt des Schaftes aufzustecken. Nach dem Aufstecken wird die Spreizhülse an ihren beiden aufgebogenen Enden um den Abschnitt umgebogen, sodaß die Spreizhülse auch die Enden der Gleithülse an der Mantelfläche des reduzierten Abschnittes festhält.

Die Erfindung wird nachfolgend anhand von in der Zeichnung dargestellten Ausführungsbeispielen näher erläutert.

Es zeigen:
- Figur 1: den erfindungsgemäßen Spreizanker mit Gleithülse;
- Figur 2: einen Querschnitt des Spreizankers nach Figur 1 gemäß der Schnittlinie A-A;
- Figur 3: den Spreizanker mit einer anderen Ausführung der Gleithülse;
- Figur 4: den Spreizanker nach Figur 3 gemäß der Schnittlinie B-B;
- Figur 5: einen Querschnitt des Spreizankers nach Figur 3 vor dem Umbiegen der Spreizhülse.

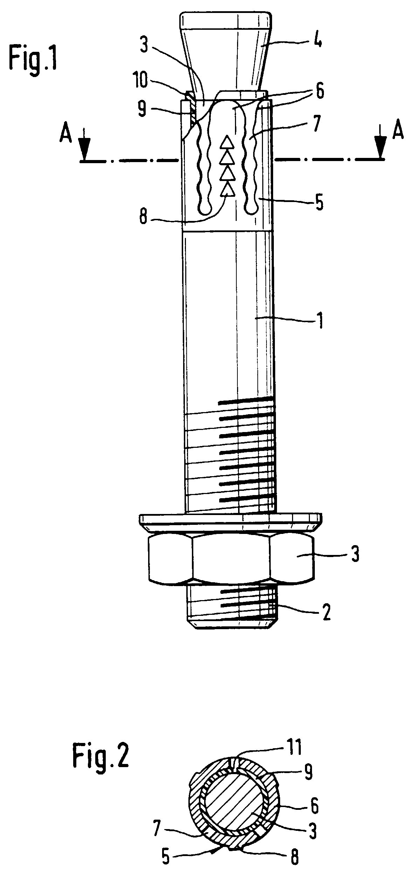

Der in Figur 1 dargestellte Spreizanker besteht aus dem Schaft 1, der an seinem hinteren Ende einen Gewindeabschnitt 2 mit einer Mutter 3 aufweist. Im vorderen Bereich des Schaftes 1 befindet sich ein abgesetzter Abschnitt 3, an den sich zum vorderen Ende hin ein Spreizkonus 4 anschließt. Im Bereich des Abschnitts 3 ist eine Spreizhülse 5 aufgesetzt, deren Spreizsegmente 6 durch von der vorderen Stirnkante der Hülse ausgehende Längsschlitze 7 gebildet sind. Zum Feststetzen der Spreizhülse im Bohrloch sind an den Spreizsegmenten 6 Sperrelemente 8 angeordnet, die durch mehrere zusammenhängende und in Längsrichtung der Spreizsegmente verlaufende Ausprägungen gebildet sind. Die Sperrelemente 8 weisen eine Dreiecksform auf, wobei die Spitze zum vorderen Ende der Spreizsegmente 6 hin gerichtet ist. Zwischen der Spreizhülse 5 und dem Abschnitt 3 ist eine Gleithülse 9 angeordnet, die sich über den gesamten Abschnitt 3 erstreckt. Die Gleithülse 9 weist an ihrem vorderen Ende eine Anschlagkante auf, die durch einen umlaufenden Bund 10 gebildet ist. Beim Einziehen des Spreizkonus 4 zur Verankerung des Spreizankers in einem Bohrloch eines Mauerwerks stützt sich die Gleithülse 9 über den an ihr angeordneten Bund 10 an den Stirnkanten der Spreizsegmente 6 ab, sodaß die Gleithülse 9 mit der Spreizhülse 5 auf den Spreizkonus 4 aufgeschoben wird. Zwischen der Konusfläche und der Innenfläche der Spreizsegmente 6 befindet sich somit während des gesamten Verankerungsvorganges eine Kunststoffschicht, die einen Metallkontakt zwischen Spreizkonus 4 und Spreizhülse 5 verhindert. Das Aufgleiten der Gleithülse 9 auf den Spreizkonus wird durch einen Längsschlitz 11 ermöglicht, der in der Querschnittsdarstellung gemäß Figur 2 erkennbar ist.

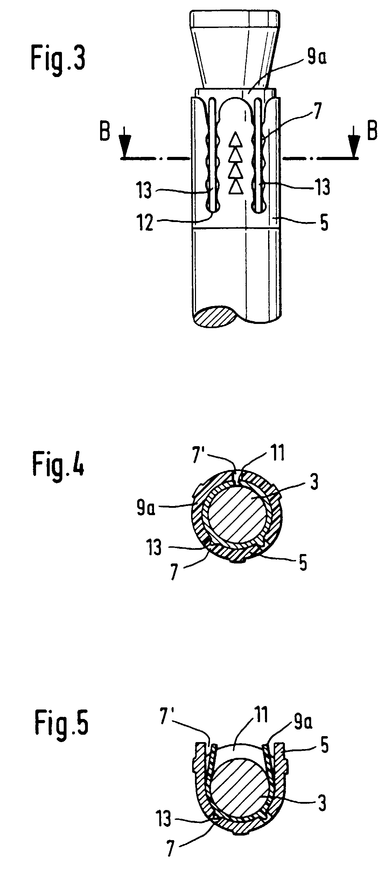

Bei der Ausführungsform der Gleithülse 9a gemäß Figur 3 wird die Anschlagkante durch die zum hinteren Ende weisende Stirnfläche 12 von Längsrippen 13 gebildet, die in die Längsschlitze 7 der Spreizhülse 5 eingreifen. Im dargestellten Ausführungsbeispiel weisen die Längsrippen parallel laufende glatte Seitenflächen auf. Sind die seitlichen Begrenzungskanten der Längsschlitze 7 - wie in den beiden Ausführungsbeispielen gezeigt - wellenförmig ausgestanzt, können auch die Seitenflächen der Längsrippen 13 eine der Kontur der Begrenzungskanten angepaßte Wellenform aufweisen.

Der in Figur 4 dargestellte Querschnitt gemäß der Schnittlinie B-B zeigt den Eingriff der Längsrippen 13 in die Längsschlitze 7 der Spreizhülse 5. Die beiden Längsrippen 7 sind symetrisch dem durchgehenden Längsschlitz 11 der Gleithülse 9a gegenüberliegend angeordnet. Damit ist eine Vormontage der Gleithülse 9a gemäß der Darstellung in Figur 5 möglich, bei der die als U-förmiges Kunststoff-Spritzgußteil hergestellte Gleithülse 9a in die ebenfalls U-förmig vorgebogene Spreizhülse 5 eingelegt wird. Durch den Eingriff der Längsrippen 13 in den ausgestanzten Längsschlitzen 7 der Spreizhülse 5 ergibt sich eine Vorarretierung in der Weise, daß der durchgehende Längsschlitz 11 der Gleithülse 9a mit dem ebenfalls durchgehenden Längsschlitz 7' der Spreizhülse 5 fluchtet. Beide durchgehenden Längsschlitze sind soweit geöffnet, daß die Spreizhülse 5 mit der Gleithülse 9a seitlich über den reduzierten Abschnitt 3 des Spreizankers übergestülpt werden kann. Danach werden die beiden Enden der aus Metall bestehenden Spreizhülse 5 zusammengebogen, wobei die beiden Enden der Gleithülse 9a mit eingebogen und gehalten werden.

## Patentansprüche

1. Spreizanker zur Verankerung in einem Bohrloch eines Betonteiles, bestehend aus einem Schaft, der an seinem hinteren Ende Mittel zum Befestigen eines Gegenstandes und an seinem vorderen Ende einen im Querschnitt reduzierten Abschnitt mit einem sich daran anschließenden Spreizkonus aufweist, auf dem eine Gleithülse angeordnet ist, und einer über den Abschnitt gestülpten Spreizhülse mit Spreizsegmente bildenden Längsschlitzen und den Durchmesser der Spreizhülse überragenden, auf den Spreizsegmenten angeordneten Sperrelementen, **dadurch gekennzeichnet**, daß die Gleithülse (9, 9a) eine dünnwandige, einen durchgehenden Längsschlitz (11) aufweisende und auf dem reduzierten Abschnitt (3) des Schaftes (1) angeordnete Kunststoffhülse ist, die eine an der Spreizhülse (5) anstoßende Anschlagkante (10, 12) aufweist, mit der die Gleithülse (9, 9a) beim Einziehen des Spreizkonus (4) in die Spreizhülse (5) auf den Spreizkonus (4) aufschiebbar ist.

2. Spreizanker nach Anspruch 1, **dadurch gekennzeichnet**, daß die Anschlagkante durch einen am vorderen Ende der Gleithülse (9) angeordneten Bund (10) gebildet ist, an dem die Stirnkanten der Spreizsegmente (6) der Spreizhülse (5) anstoßen.

3. Spreizanker nach Anspruch 1, **dadurch gekennzeichne**t, daß die Anschlagkante durch die zum hinteren Ende weisende Stirnfläche (12) von an der Gleithülse (9a) angeordneten und in die Längsschlitze (7) der Spreizhülse (5) eingreifenden Längsrippen (13) gebildet ist.

4. Spreizanker nach Anspruch 3, **dadurch gekennzeichnet**, daß an der Gleithülse (9a) zwei Längsrippen (13) symetrisch dem durchgehenden Längsschlitz (11) der Gleithülse (9a) gegenüberliegend angeordnet sind, und daß der durchgehende Längsschlitz (11) im unmontierten Zustand eine lichte Weite aufweist, die etwa dem Durchmesser des reduzierten Abschnittes (3) des Schaftes (1) entspricht.

## Claims

1. Expansible anchor for anchoring in a hole drilled in a concrete part, consisting of a shank that has at its rear end means for fastening an article and at its front end a portion that is of reduced cross-section having an adjoining expander cone, on which shank there is arranged a slide-enhancing sleeve, and of an expansible sleeve that is slipped over the portion and has longitudinal slots that form expansible segments and locking elements that project beyond the diameter of the expansible sleeve and are arranged on the expansible segments, characterised in that the slide-enhancing sleeve (9, 9a) is a thin-walled plastics sleeve that has a continuous longitudinal slit (11) and is arranged on the reduced portion (3) of the shank (1), which plastics sleeve has a stop edge (10, 12) that abuts the expansible sleeve (5), with which stop edge the slide-enhancing sleeve (9, 9a) can be pushed onto the expander cone (4) as the expander cone (4) is drawn into the expansible sleeve (5).

2. Expansible anchor according to claim 1, characterised in that the stop edge is formed by a collar (10) that is arranged on the front end of the slide-enhancing sleeve (9), against which collar the leading edges of the expansible segments (6) of the expansible sleeve (5) abut.

3. Expansible anchor according to claim 1, characterised in that the stop edge is formed by the rearwardly facing end face (12) of longitudinal ribs (13) that are arranged on the slide-enhancing sleeve (9a) and that engage in the longitudinal slots (7) of the expansible sleeve (5).

4. Expansible anchor according to claim 3, characterised in that two longitudinal ribs (13) are arranged on the slide-enhancing sleeve (9a) symmetrically opposite to the continuous longitudinal slit (11) of the slide-enhancing sleeve (9a) and the continuous longitudinal slit (11), in the unassembled state, has an internal width that corresponds approximately to the diameter of the reduced portion (3) of the shank (1).

## Revendications

1. Cheville à douille métallique expansible destinée à être immobilisée dans un perçage d'un élément en béton, composée d'une tige qui présente à son extrémité arrière des moyens pour fixer un objet et à son extrémité avant un segment de section réduite que prolonge un cône d'expansion sur lequel est placée une douille de glissement, et d'une douille expansible enfoncée sur le segment qui comprend des fentes longitudinales formant des segments expansibles et des éléments de blocage dépassant du diamètre de la douille de glissement et disposés sur les segments expansibles, caractérisée en ce que la douille de glissement (9, 9a) est une douille en matière plastique à paroi mince présentant une fente longitudinale ininterrompue (11) qui est disposée sur le segment réduit (3) de la tige (1) et qui présente une arête de butée (10, 12) se mettant en butée contre la douille expansible (5), à l'aide de laquelle la douille de glissement (9, 9a) peut glisser sur le cône d'expansion (4) lors de l'introduction du cône d'expansion (4) dans la douille expansible (5).

2. Cheville à douille métallique expansible selon la revendication 1, caractérisée en ce que l'arête de butée est formée par un épaulement (10) situé à l'extrémité avant de la douille de glissement (9), contre lequel les arêtes frontales des segments expansibles (6) de la douille expansible (5) se mettent en butée.

3. Cheville à douille métallique expansible selon la revendication 1, caractérisée en ce que l'arête de butée est formée par la surface frontale (12) pointant vers l'extrémité arrière de nervures longitudinales (13) situées sur la douille de glissement (9a) et se mettant en prise avec des fentes longitudinales (7) de la douille expansible (5).

4. Cheville à douille métallique expansible selon la revendication 3, caractérisée en ce que deux nervures longitudinales (13) sont disposées de façon symétrique sur la douille de glissement (9a), à l'opposé de la fente longitudinale ininterrompue (11) de la douille de glissement (9a), et en ce que la fente longitudinale ininterrompue (11) présente à l'état non monté une ouverture correspondant approximativement au diamètre du segment réduit (3) de la tige (1).
